# EUROPEAN PATENT SPECIFICATION

(11) **EP 3 973 082 B1**
(45) Date of publication and mention of the grant of the patent: **07.06.2023**
(21) Application number: 20725577.9
(22) Date of filing: 19.05.2020
(51) Int. Cl.: C21B 5/00, C21B 5/06, C21B 13/00

(54) **METHOD FOR OPERATING A BLAST FURNACE**
VERFAHREN ZUM BETRIEB EINES HOCHOFENS
PROCÉDÉ D'UTILISATION DE HAUT-FOURNEAU

(30) Priority: 21.05.2019 LU 101227
(43) Date of publication of application: 30.03.2022
(73) Proprietor: Paul Wurth S.A., 1122 Luxembourg (LU)
(72) Inventor: KINZEL, Klaus Peter, 5222 Sandweiler (LU); AGRAWAL, Anand Kumar, 3394 Roeser (LU); KASS, Gilles, 4986 Sanem (LU)
(74) Representative: Office Freylinger
(86) International application number: PCT/EP2020/063952
(87) International publication number: WO 2020/234290

(56) References cited:
- EP-A1- 2 886 666
- WO-A1-2019/057930

## Description

### Technical Field

The invention relates to a method for operating a blast furnace.

### Background Art

Despite alternative methods, like scrap melting or direct reduction within an electric arc furnace, the blast furnace today still represents the most widely used process for steel production. One of the concerns of a blast furnace installation is the blast furnace gas exiting the blast furnace. Since this gas exits the blast furnace at its top it is commonly also referred to as "top gas". While, in the early days, this blast furnace gas may have been allowed to simply escape into the atmosphere, this has long been considered a waste of resources and an undue burden on the environment. One component in the blast furnace gas is CO₂, which is environmentally harmful and is mainly useless for industrial applications. Indeed, the blast furnace gas exiting the blast furnace typically comprises a concentration of CO₂ as high as 20% to 50%. Apart from this, the blast furnace gas usually comprises considerable amounts of N₂, CO, H₂O and H₂. The N₂ content, however, largely depends on whether hot air or (pure) oxygen is used for the blast furnace.

Mainly in order to reduce the amount of coke used, a suggestion was made to recover the blast furnace gas from the blast furnace, treat it to improve its reduction potential and to inject it back into the blast furnace to aid the reduction process. One method for doing this is reducing the CO₂ content in the blast furnace gas by Pressure Swing Adsorption (PSA) or Vacuum Pressure Swing Adsorption (VPSA), such as disclosed in patent application EP 2 886 666 A1. PSA/VPSA installations produce a first stream of gas which is rich in CO and H₂ and a second stream of gas rich in CO₂ and H₂O. The first stream of gas can be used as reduction gas and fed back into the blast furnace. One example for this approach is the ULCOS (Ultra Low CO₂ Steelmaking) process, where apart from the recycled first stream of gas, pulverized coal and cold oxygen are fed into the blast furnace. This type of furnace is also referred to as "top gas recycling OBF" (oxygen blast furnace).

The second stream of gas can be removed from the installation and, after extraction of the remaining calorific value, disposed of. This disposal controversially consists in pumping the CO₂ rich gas into pockets underground for storage. Furthermore, although PSA/VPSA installations allow a considerable reduction of CO₂ content in the blast furnace gas from about 35% to about 5%, they are very expensive to acquire, to maintain and to operate and they need a lot of space.

It has also been proposed to reform the blast furnace gas in order to obtain a synthesis gas (also referred to as syngas) that can be used for several industrial purposes. According to the most common reforming process such as the one disclosed in WO 2019/057930 A1, the blast furnace gas is mixed with a fuel gas that contains at least one hydrocarbon (e.g. CH₄ and possibly higher molecular weight hydrocarbons). In a so-called dry reforming reaction, the hydrocarbons of the fuel gas react with the CO₂ in the blast furnace gas to produce H₂ and CO. In a so-called wet reforming reaction, the hydrocarbons react with the H₂O in the blast furnace gas also to produce H₂ and CO. Either way, a synthesis gas is obtained that has a significantly increased concentration of H₂ and CO. It has also been proposed to use this synthesis gas as a reducing gas, which can be recycled, i.e. re-introduced into the blast furnace. According to one process, the syngas is fed into the blast furnace together with hot blast (i.e. hot air) and pulverized coal. This type of furnace can also be referred to as a "syngas blast furnace".

### Technical Problem

It is thus an object of the present invention to provide an optimised blast furnace operation. This object is solved by a method according to claim 1.

### General Description of the Invention

The invention provides a method for operating a blast furnace. In a first step, method comprises collecting a blast furnace gas from the blast furnace, said blast furnace gas being a CO₂ containing gas. In particular, the blast furnace gas may have a CO₂ concentration of 20% to 50%. The blast furnace gas or BFG can also be referred to as top gas, since it is obtained from the top of the blast furnace. Apart from CO₂, the BFG may contain other components like CO, H₂O, H₂ or other. In particular, it may be an H₂O containing gas. As will be explained below, the BFG preferably has a very low concentration of N₂, for example below 20%, below 10% or below 5%. In general, though, the N₂ concentration may be between 0% and 50%. Normally, the blast furnace gas needs to be cleaned, in order to reduce its dust content. Also, its H₂O content is preferably drastically lowered by condensation. This can be done for example in a gas cleaning plant where the temperature of the gas is lowered and the water may condensate.

The collected blast furnace gas (which normally has been cleaned) is then combined with a fuel gas to obtain a gas mixture, said fuel gas being a hydrocarbon containing gas. The fuel gas may be e.g. a coke oven gas (COG), a natural gas, a biogas or a mixture of any of these gases. It normally has a high concentration of low-molecular hydrocarbons, in particular CH₄. In the gas mixture, the blast furnace gas and the fuel gas can be more or less well mixed. Combining the blast furnace gas with the fuel gas in general refers to "allowing the blast furnace gas to mix with the fuel gas". This may comprise (actively) mixing the blast furnace gas with the fuel gas, i.e. applying mechanical force to mix the gases. However, in some cases it may be sufficient e.g. to inject the two gases into a vessel, so that mixing occurs more or less passively by convection and/or diffusion. It is understood, though, that the chemical reaction is enhanced by a higher degree of mixing. It is possible that the two gases are combined in a dedicated vessel which may be referred to as a mixing vessel or mixing chamber. While combining the collected blast furnace gas with a fuel gas, it is possible and still within the scope of the present invention to add a supplemental gas to the gas mixture, the supplemental gas being preferably a CO₂ and/or H₂O containing gas, such as basic oxygen furnace (BOF) gas, pure steam or pure CO₂. The supplemental gas may be added in order to adjust the composition of the blast furnace gas.

The gas mixture is subjected to a reforming process, thereby producing a synthesis gas containing CO and H₂. The chemical mechanism of the reforming process is not limited within the scope of the invention, but it normally comprises at least that the CO₂ content of the blast furnace gas reacts with the hydrocarbon in the fuel gas, e.g. according to the following reaction: CO₂ + CH₄ → 2 H₂ + 2 CO. This may also be referred to as dry reforming. Also, the H₂O content of the blast furnace gas may react with the hydrocarbon in the fuel gas, e.g. according to the following reaction: H₂O + CH₄ → 3 H₂ + CO. This may also be referred to as wet reforming. The reforming process normally requires elevated temperatures, e.g. above 700°C. It can be carried out in the same vessel as the combining (or mixing) of the gases or in a dedicated reforming vessel. In particular, a heat accumulator may be used (e.g. as described in WO 2010/049536 or US 4,005,986). Each of the fuel gas and the blast furnace gas may be heated individually before the gas mixture is obtained. Alternatively or additionally, the obtained gas mixture may be heated in order to obtain or maintain the temperature required for the reforming process. The reforming process may also be carried out under elevated pressure. In this case, the gas mixture may be compressed or the blast furnace gas and fuel gas can be compressed individually and be combined. The reforming process can optionally be aided by a catalyst that is usually introduced into the reforming vessel. It should be noted that although at least some blast furnace gas needs to be mixed with some fuel gas in order to start the reforming process, the mixing and the reforming can occur at least partially simultaneously.

In another step, at least a portion of the synthesis gas and an oxygen-rich gas are fed into the blast furnace. The oxygen-rich gas is in general a gas that has a O₂ concentration significantly higher than air. Normally, the oxygen-rich gas consists mainly of O₂, i.e. it has an O₂ concentration of more than 50%. Preferably, it contains at least 60%, preferably at least 80%, more preferably at least 90% of O₂. In some cases, the oxygen-rich gas may even be referred to as "oxygen", although it is understood that minor concentrations (e.g. <5%) of other components like N₂ can hardly be avoided. Normally, the synthesis gas and the oxygen-rich gas are fed at the tuyere level of the blast furnace or through at least one tuyere.

In the inventive method, the synthesis gas is re-introduced into the blast furnace as a reduction gas, together with the oxygen-rich gas. It is understood that by recycling, i.e. reforming and re-introducing, the blast furnace gas, the CO₂ emissions of the blast furnace can be greatly reduced. Also, the inventive method does not require PSA or VPSA. Rather, the blast furnace gas can be used for the reforming process in an untreated or unaltered state. I.e., the chemical composition of the blast furnace gas does not have to be changed between the collecting from the blast furnace and the reforming process. In other words, and unlike to the method disclosed in EP 2 886 666 A1, the present inventive method does not require a preliminary decarbonating of the blast furnace gas. Put it differently, the blast furnace gas is combined with the fuel gas while containing substantially the same amount of CO₂ as when exiting the blast furnace. Also, since the oxygen-rich gas contains significantly less N₂ than air, the concentration of reducing gases as CO and H₂ is higher, which helps to increase the productivity of the blast furnace.

Despite the above-mentioned benefits of the inventive method, the use of the oxygen-rich gas could potentially lead to difficulties. On the one hand, the flame temperature can be increased with respect to the use of air, because the nitrogen contained in the air cools the flame in the raceway (i.e. the region directly behind the gas injection into the blast furnace). On the other hand, the top gas temperature can decrease because of the reduced amount of nitrogen, since nitrogen significantly contributes to heat transport within the blast furnace. Thus, proper heating and drying of the cold furnace burden becomes difficult or impossible, which results in significant operational problems. Both of these problems are alleviated according to the invention in that the blast furnace gas is combined with the fuel gas in an over-stoichiometric ratio, so that the synthesis gas contains a surplus portion of the blast furnace gas. In other words, combining blast furnace gas and fuel gas in an over-stoichiometric ratio eases the problems of both proper heating and drying of the cold furnace burden.

In the stoichiometric reaction, the amount of oxidant, mainly CO₂ and/or H₂O (coming from the blast furnace gas and fuel gas) in the gas mixture (mixture of blast furnace gas with fuel gas) prior to the reforming is such that its complete content is consumed when reacting with the hydrocarbon contained in the fuel gas. For example, when the fuel gas flow contains 1 mol/s of methane CH₄, the gas mixture flow must contain exactly 1 mol/s of oxidant (CO₂ and/or H₂O) in order that all methane can convert into H₂ and CO. Depending on the type of hydrocarbon contained in the fuel gas, this relationship between hydrocarbon and oxidant might be different. In the over-stoichiometric case, on the other hand, the flow of oxidant (CO₂ and/or H₂O) in the gas mixture will be higher than the flow in the stoichiometric case. For example, when the fuel gas flow contains 1mol/s of methane CH₄, the mix gas flow might contain 1,2 mol/s of oxidant (CO₂ and/or H₂O) in order that after the complete reaction of the hydrocarbon contained in the fuel gas there will still be remaining oxidant in the synthesis gas.

Combining the blast furnace gas with the fuel gas in an over-stoichiometric ratio, as suggested by the present invention and unlike what is known from the prior art such as WO 2019/057930 A1, has several advantages. On the one hand, the surplus portion of the blast furnace gas has the same temperature as the other components of the synthesis gas, thereby bringing additional latent heat into the furnace, which allows decreasing the fuel rate of the blast furnace. In other words, the over-stoichiometric amount of blast furnace gas acts as a heat carrier within the blast furnace, decreasing its fuel consumption. On the other hand, it helps to increase the top gas temperature since it is a heat carrier medium within the blast furnace. In other words, the over-stoichiometric amount of blast furnace gas acts as a heat carrier within the blast furnace. The surplus portion of the blast furnace gas thus allows regulating the top gas temperature of the blast furnace. Moreover, the surplus portion of the blast furnace gas acting as heat carrier allows operating the reforming process at a lower temperature than the temperature usually needed when using a reforming reactor or reforming vessel of equivalent size. Alternatively, at the same reaction temperature the reactor size can be maintained allowing a substantial reduction of the investment cost for the production unit of the synthesis gas. Furthermore, the CO₂ and/or the H₂O contained in the synthesis gas due to the surplus portion of blast furnace gas (i,e, due to the fact that the blast furnace gas is combined with the fuel gas in an over-stoichiometric ratio) may react with C to produce CO and/or H₂ in an endothermic reaction, which lowers the flame temperature.

It is worth mentioning also, that the over-stoichiometric ratio can be applied in order to reduce undesired reactions, such as e.g. soot deposition, during the reforming process. Also, the reforming reaction can be controlled by regulating the over-stoichiometric ratio.

While the blast furnace gas is preferably combined with the fuel gas in an over-stoichiometric ratio before the reforming process, it is not excluded and still within the scope of the present invention to combine the blast furnace gas with the fuel gas in a stoichiometric ratio before the reforming process and adding additional blast furnace gas after the reforming process. In any case, the produced synthesis being fed to the blast furnace gas may contain a significant amount of unreacted blast furnace gas.

With the inventive method, it is also possible to completely eliminate the need for hot blast injection in the blast furnace. Even if hot blast injection is employed (to a reduced extent), the oxygen-rich gas is not mixed with the hot blast outside the blast furnace, but it is injected separately. For instance, it could be injected by a separate lance or a separate port at a tuyere.

Preferably, the synthesis gas is fed into the blast furnace having a temperature of at least 800°C, preferably at least 1000°C. In other words, the synthesis gas is fed as a hot gas. This may require the synthesis gas to be heated after the reforming process. In other cases, the synthesis gas may have a sufficiently high temperature after the reforming process so that it may be introduced into the blast furnace without additional heating. The synthesis gas can be injected in the blast furnace at tuyere level or alternatively also at lower shaft level of the blast furnace.

At the same time, the oxygen-rich gas can have a temperature below 100°C. In particular, the oxygen-rich gas may have ambient temperature, i.e. between 15°C and 40°C. Alternatively, though, the oxygen-rich gas can have a temperature of at least 100°C. Such an elevated temperature may e.g. stem from the production of the oxygen-rich gas.

According to one embodiment, the over-stoichiometric ratio is adjusted to control a top gas temperature of the blast furnace. In other words, the ratio (or the stoichiometric factor) is used as a means to control the top gas temperature. Preferably, the top gas temperature is measured directly or indirectly and regulated by dynamically adapting the ratio. In other words, a closed loop is used to limit greater temperature deviations.

According to another embodiment, which may be combined with the above embodiment, the over-stoichiometric ratio is adjusted to control a flame temperature of the blast furnace. In this case, the ratio is used as a means to control the flame temperature. This is mainly based on the endothermic reaction of the CO₂ and/or H₂O with components like coke or auxiliary fuel that can be fed or injected into the blast furnace. Again, the flame temperature can be measured directly or indirectly and the ratio can be adjusted to regulate the flame temperature.

Advantageously, an auxiliary fuel, such as pulverized coal, known as pulverised coal injection (PCI) or a gas such as, but without being limited to, natural gas or coke oven gas, is fed into the blast furnace along with the synthesis gas and the oxygen-rich gas. This kind of process is principally known in the art. In this embodiment, the over-stoichiometric amount of blast furnace gas acts as a heat carrier within the blast furnace advantageously allowing increasing the amount of auxiliary fuel fed into the blast furnace.

There are various possibilities how the different components can be fed into the blast furnace. As mentioned above, the synthesis gas can be fed either at a tuyere level or at a shaft level. For example, the synthesis gas can be fed through a tuyere, while the oxygen-rich gas and the auxiliary fuel are fed through dedicated lances arranged inside the tuyere. Alternatively, the auxiliary fuel and the oxygen-rich gas can be injected through a lance that is concentrically arranged inside the tuyere, having the auxiliary fuel in the inner tube and the cold oxygen in the outer tube.

Not all of the blast furnace gas that is collected from the blast furnace needs to be combined with the fuel gas. According to one embodiment, a portion of the blast furnace gas is burned with oxygen to create a waste gas. It is not necessary, although possibly advantageous, to use highly pure oxygen (O₂). Rather, any gas or gas mixture that contains a sufficient concentration of O₂ can be used, possibly even air. By way of example, the blast furnace gas may have an N₂ concentration below 5%, a CO and CO₂ concentration of about 40% each and about 15% of H₂. When this gas is burned with oxygen, the waste gas may have an approximate composition of 80% CO₂, 15% H₂O and 5% N₂. More generally, the blast furnace gas may have an N₂ concentration of 0-50%, a CO and CO₂ concentration of 20-50% each and a H₂ concentration of 2-25%. Of course, the composition of the waste gas depends on the actual composition of the blast furnace gas.

The waste gas or off-gas may advantageously be condensated and cooled. Thereby, the CO₂ concentration can be increased further, e.g. up to 95%.

Preferably, a portion of the blast furnace gas is burned in a heating device. Such a heating device, which may comprise one or several burners, may be used for various purposes. For example, the heating device can be used for heating the blast furnace gas, the fuel gas, the gas mixture and/or the synthesis gas. It can also be used to supply the energy for the reforming reaction. If it is used for heating the synthesis gas, this is mainly in order to increase the latent heat introduced into the blast furnace by the synthesis gas.

In particular after the above-mentioned condensation and cooling, the CO₂ concentration of the waste gas is extremely high. Therefore, least a portion of the waste gas can be used for carbon capture and storage. Alternatively or additionally, at least a portion of the waste gas may be used for carbon capture and utilisation.

Additionally or alternatively, at least a portion of the waste gas can be used for synthesis gas production. The synthesis gas production may comprise a similar or identical reforming process as described above. For example, this may be a dry reforming, where the CO₂ reacts with hydrocarbons to produce CO₂ and H₂O.

Another possibility is that at least a portion of the blast furnace gas is provided to at least one external device. This external device is not part of or directly associated with the blast furnace. It can be some other device in a steel plant or even outside the steel plant. In this external device or external plant, the blast furnace gas may be used as fuel for a combustion or for other chemical purposes. Also, it is conceivable to simply use the remaining latent heat of the blast furnace gas.

### Brief Description of the Drawings

Preferred embodiments of the invention will now be described, by way of example, with reference to the accompanying drawings, in which:

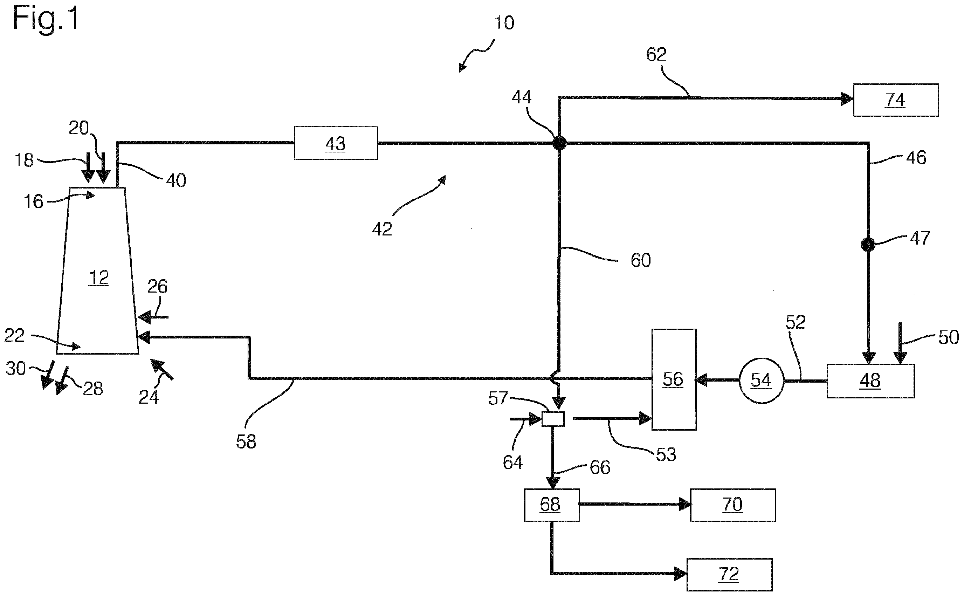

- Fig. 1: is a schematic view of a blast furnace installation for carrying out the method for operating a blast furnace according to the present invention.

### Description of Preferred Embodiments

Fig.1 shows a blast furnace installation 10 comprising a blast furnace 12. The top end 16 of the blast furnace 12 generally receives a charge of coke 18 and a charge of ore 20, while the bottom end 22 of the blast furnace 12 generally receives pulverized coal 24 and an oxygen-rich gas 26. For example, the oxygen-rich gas may have an O₂ concentration of 95% and an N₂ concentration of 5%. At the bottom end 22, pig iron 28 and slag 30 are extracted from the blast furnace 12. The operation of the blast furnace itself is well known and will not be further described herein.

The blast furnace installation 10 further comprises gas recovery tubes 40 for recovering blast furnace gas from the blast furnace 12. By way of example, the recovered blast furnace gas may have a N₂ concentration below 5%, a CO and CO₂ concentration of about 40% each and about 15% of H₂. More generally, the blast furnace gas may have an N₂ concentration of 0-50%, a CO and CO₂ concentration of 20-50% each and a H₂ concentration of 2-25%. It is fed to gas recovery piping 42 comprising a distribution valve 44. The blast furnace installation 10 may comprise a gas cleaning plant 43 arranged between the gas recovery tubes 40 and the distribution valve 44 for cleaning the gas recovered from the blast furnace 12, mostly for removing particulate matter from the gas and possibly condensing a part of the vapour contained in the blast furnace gas. It should be noted that the above concentrations are for a dry composition of blast furnace gas. However, the blast furnace gas may also be wet, i.e. it may contain moisture.

At the distribution valve 44, at least a portion of the recovered blast furnace gas is directed through a first feed pipe 46 to a mixing chamber 48. The mixing chamber 48 is provided with a second feed pipe 50 for feeding a hydrocarbon containing gas, for example coke oven gas and/or natural gas and/or biogas, into the mixing chamber 48. Within the mixing chamber 48, the blast furnace gas and the hydrocarbon containing gas are mixed together to form a gas mixture. This gas mixture is then fed through a third feed pipe 52, which may comprise a blower 54, into a reactor 56. Energy 53 may be added to the reactor 56 in order to sustain the reaction and to heat the gas mixture. The energy 53 can be supplied directly or indirectly to the reactor. The energy can be any kind of energy, as for example electric energy using an electric arc, a plasma torch or an electric resistance but can advantageously result from a burning process of a fuel gas in the burner 57. The gas mixture is normally compressed. Alternatively, both gases can be compressed individually and be mixed afterwards. In the reactor 56, the gas mixture is heated to a high temperature, thereby subjecting the gas mixture to a reforming process, which in this case is mainly a dry reforming process according to the following reaction: CO₂ + CH₄ → 2 H₂ + 2 CO. In this example, the dry reforming process is carried out at a temperature between 800°C and 1500°C within the reactor 56 without the need of a catalyst. Alternatively, a catalyst could be used, e.g. by providing the reactor 56 with a catalyst.

The produced synthesis gas is then fed via a fourth feed pipe 58 as reducing gas back into the blast furnace 12, either at a tuyere level or at a lower shaft level.

In case of injection of the synthesis gas at the tuyere level, the synthesis gas is injected along with the auxiliary fuel 24 and the oxygen-rich gas 26. While the synthesis gas is fed at a temperature of at least 800°C, the oxygen-rich gas 26 typically has ambient temperature, although it may also have a higher temperature.

While the use of the oxygen-rich gas 26 increase the productivity of the blast furnace 12, it could potentially lead to difficulties. On the one hand, it could lead to an increased flame temperature in the raceway of the blast furnace 12, because the flame is not cooled by nitrogen, on the other hand, the top gas temperature could decrease because heat transport by nitrogen, and thus the heating of the cold furnace burden, is greatly decreased. To counter these problems, a flow control valve 47 is disposed in the first feed pipe 46, by which the ratio of the blast furnace gas and the fuel gas can be adjusted. In general, an over-stoichiometric ratio is applied, so that the synthesis gas may contain unreacted blast furnace gas. In particular, the CO₂ concentration and/or the H₂O concentration of the synthesis gas is increased. On the one hand, this additional blast furnace gas brings additional latent heat into the blast furnace 12, which helps to increase the top gas temperature. On the other hand, the CO₂ and/or H₂O contained in the synthesis gas may react with C in the blast furnace 12 to produce CO and/or H₂ in an endothermic reaction, which lowers the flame temperature. In particular, the top gas temperature and/or the flame temperature may be monitored and the ratio may be adjusted to control at least one of these temperatures and keep it within a desired range. At the distribution valve 44, at least a portion of the recovered blast furnace gas may be directed through a fifth feed pipe 60 to the burner 57 of the reactor 56 to supply the energy 53 required to heat up the gas mixture and sustain the reforming reaction. Alternatively or additionally, it could also be used for a burner for heating the blast furnace gas in the first feed pipe 46, the coke oven gas in the second feed pipe 50 or the synthesis gas in the fourth feed pipe 58. In the burner 57, the blast furnace gas is burned preferably with oxygen 64, thereby producing a high CO₂ containing waste gas 66. The waste gas 66 may have a composition of e.g. 80% CO₂, 15% H₂O and 5% N₂. It can be collected and supplied to a cooler 68, where it is condensated and cooled, whereby the CO₂ concentration can be increased further, e.g. up to 95%. Therefore, it can be used for carbon capture and storage (CCS) in a storage site 70 or it can be used, e.g. in a chemical plant 72, for synthesis gas production.

Another portion of the blast furnace gas is provided through a sixth feed pipe 62 to an external plant 74 that is not part of or directly associated with the blast furnace. It can be some other device in a steel plant or even outside the steel plant. In this external plant 74, the blast furnace gas may be used e.g. as burner fuel or for other chemical purposes.

**Legend of Reference Numbers:**

| | | | |
|---|---|---|---|
| 10 | blast furnace installation | 48 | mixing chamber |
| 12 | blast furnace | 50 | second feed pipe |
| 16 | top end | 52 | third feed pipe |
| 18 | charge of coke | 53 | energy |
| 20 | charge of ore | 54 | blower |
| 22 | bottom end | 56 | reactor |
| 24 | auxiliary fuel | 57 | burner |
| 26 | oxygen-rich gas | 58 | fourth feed pipe |
| 28 | pig iron | 60 | fifth feed pipe |
| 30 | slag | 62 | sixth feed pipe |
| 40 | gas recovery tube | 64 | oxygen |
| 42 | gas recovery piping | 66 | waste gas |
| 43 | gas cleaning plant | 68 | cooler |
| 44 | distribution valve | 70 | storage site |
| 46 | first feed pipe | 72 | chemical plant |
| 47 | flow control valve | 74 | external plant |

## Claims

1. A method for operating a blast furnace, the method comprising:
- collecting a blast furnace gas from the blast furnace (12), said blast furnace gas being a CO₂ containing gas;
- combining the blast furnace gas with a fuel gas to obtain a gas mixture, said fuel gas being a hydrocarbon containing gas;
- subjecting said gas mixture to a reforming process, thereby producing a synthesis gas containing CO and H₂; and
- feeding at least a portion of the synthesis gas and an oxygen-rich gas (26) into the blast furnace,
wherein the blast furnace gas is combined with the fuel gas while not having been submitted to a preliminary decarbonating after exiting the blast furnace and wherein the blast furnace gas is combined with the fuel gas in an over-stoichiometric ratio, so that the synthesis gas contains a surplus portion of the blast furnace gas.

2. A method according to claim 1, **characterised in that** the blast furnace gas is combined with the fuel gas in an over-stoichiometric ratio before the reforming process.

3. A method according to claim 1, **characterised in that** the blast furnace gas is combined with the fuel gas in a stoichiometric ratio before the reforming process, while additional blast furnace gas is combined with the synthesis gas after the reforming process.

4. A method according to any of the preceding claims, **characterised in that** the oxygen-rich gas (26) contains at least 60%, preferably at least 80%, more preferably at least 90% of O₂.

5. A method according to any of the preceding claims, **characterised in that** the oxygen-rich gas has a temperature below 100°C

6. A method according to any of the preceding claims, **characterised in that** the synthesis gas is fed into the blast furnace (12) at a tuyere level and/or lower shaft level having a temperature of at least 800°C, preferably at least 1000°C.

7. A method according to any of the preceding claims, **characterised in that** the over-stoichiometric ratio is adjusted to control a top gas temperature of the blast furnace (12).

8. A method according to any of the preceding claims, **characterised in that** the over-stoichiometric ratio is adjusted to control a flame temperature of the blast furnace (12).

9. A method according to any of the preceding claims, **characterised in that** in addition to the synthesis gas and the oxygen-rich gas (26), an auxiliary fuel (24) is fed into the blast furnace.

10. A method according to any of the preceding claims, **characterised in that** a portion of the blast furnace gas is burned with oxygen (64) to create a waste gas (66).

11. A method according to any of the preceding claims, **characterised in that** the waste gas (66) is condensated and cooled.

12. A method according to any of the preceding claims, **characterised in that** a portion of the blast furnace gas is burned in a heating device (57).

13. A method according to any of the preceding claims, **characterised in that** the heating device (57) is used for heating the blast furnace gas, the fuel gas, the gas mixture and/or the synthesis gas.

14. A method according to any of the preceding claims, **characterised in that** at least a portion of the waste gas (66) is used for carbon capture and storage and/or carbon capture and utilisation.

15. A method according to any of the preceding claims, **characterised in that** at least a portion of the waste gas (66) is used for synthesis gas production.

## Patentansprüche

1. Verfahren zum Betreiben eines Hochofens, wobei das Verfahren Folgendes umfasst:
- Sammeln eines Gichtgases aus dem Hochofen (12), wobei es sich bei dem Gichtgas um ein CO₂-haltiges Gas handelt;
- Kombinieren des Gichtgases mit einem Brenngas, um ein Gasgemisch zu erhalten, wobei es sich bei dem Brenngas um ein kohlenwasserstoffhaltiges Gas handelt;
- Unterziehen des Gasgemisches einem Reformierverfahren, wodurch ein CO- und H₂-haltiges Synthesegas erzeugt wird; und
- Einspeisen mindestens eines Teils des Synthesegases und eines sauerstoffreichen Gases (26) in den Hochofen,
wobei das Gichtgas mit dem Brenngas kombiniert wird, während es nach dem Verlassen des Hochofens keiner vorläufigen Entkohlung unterzogen wurde, und wobei das Gichtgas mit dem Brenngas in einem überstöchiometrischen Verhältnis kombiniert wird, so dass das Synthesegas einen überschüssigen Anteil des Gichtgases enthält.

2. Verfahren nach Anspruch 1, **dadurch gekennzeichnet, dass** das Gichtgas mit dem Brenngas in einem überstöchiometrischen Verhältnis vor dem Reformierverfahren gemischt wird.

3. Verfahren nach Anspruch 1, **dadurch gekennzeichnet, dass** das Gichtgas mit dem Brenngas in einem stöchiometrischen Verhältnis vor dem Reformierverfahren kombiniert wird, während zusätzliches Gichtgas mit dem Synthesegas nach dem Reformierverfahren kombiniert wird.

4. Verfahren nach einem der vorhergehenden Ansprüche, **dadurch gekennzeichnet, dass** das sauerstoffreiche Gas (26) mindestens 60 %, vorzugsweise mindestens 80 %, besonders bevorzugt mindestens 90 % O₂ enthält.

5. Verfahren nach einem der vorhergehenden Ansprüche, **dadurch gekennzeichnet, dass** das sauerstoffreiche Gas eine Temperatur unter 100 °C aufweist.

6. Verfahren nach einem der vorhergehenden Ansprüche, **dadurch gekennzeichnet, dass** das Synthesegas in den Hochofen (12) auf einer Blasformen-Ebene und/oder unteren Schachtebene mit einer Temperatur von mindestens 800 °C, vorzugsweise mindestens 1000 °C eingespeist wird.

7. Verfahren nach einem der vorhergehenden Ansprüche, **dadurch gekennzeichnet, dass** das überstöchiometrische Verhältnis eingestellt wird, um eine obere Gastemperatur des Hochofens (12) zu steuern.

8. Verfahren nach einem der vorhergehenden Ansprüche, **dadurch gekennzeichnet, dass** das überstöchiometrische Verhältnis eingestellt wird, um eine Flammentemperatur des Hochofens (12) zu steuern.

9. Verfahren nach einem der vorhergehenden Ansprüche, **dadurch gekennzeichnet, dass** zusätzlich zu dem Synthesegas und dem sauerstoffreichen Gas (26) ein Zusatzbrennstoff (24) in den Hochofen eingespeist wird.

10. Verfahren nach einem der vorhergehenden Ansprüche, **dadurch gekennzeichnet, dass** ein Teil des Gichtgases mit Sauerstoff (64) verbrannt wird, um ein Abgas (66) zu erzeugen.

11. Verfahren nach einem der vorhergehenden Ansprüche, **dadurch gekennzeichnet, dass** das Abgas (66) kondensiert und gekühlt wird.

12. Verfahren nach einem der vorhergehenden Ansprüche, **dadurch gekennzeichnet, dass** ein Teil des Gichtgases in einer Heizvorrichtung (57) verbrannt wird.

13. Verfahren nach einem der vorhergehenden Ansprüche, **dadurch gekennzeichnet, dass** die Heizvorrichtung (57) zum Erhitzen des Gichtgases, des Brenngases, des Gasgemisches und/oder des Synthesegases verwendet wird.

14. Verfahren nach einem der vorhergehenden Ansprüche, **dadurch gekennzeichnet, dass** zumindest ein Teil des Abgases (66) zur Kohlenstoffabscheidung und -speicherung und/oder Kohlenstoffabscheidung und -nutzung verwendet wird.

15. Verfahren nach einem der vorhergehenden Ansprüche, **dadurch gekennzeichnet, dass** zumindest ein Teil des Abgases (66) zur Synthesegaserzeugung verwendet wird.

## Revendications

1. Procédé de fonctionnement d'un haut fourneau, le procédé comprenant :
- le recueil d'un gaz de haut fourneau à partir du haut fourneau (12), ledit gaz de haut fourneau étant un gaz contenant du CO₂ ;
- la combinaison du gaz de haut fourneau à un gaz combustible afin d'obtenir un mélange de gaz, ledit gaz combustible étant un gaz contenant un hydrocarbure ;
- la soumission dudit mélange de gaz à un processus de reformage, ce qui produit un gaz de synthèse contenant du CO et du H₂ ; et
- l'introduction d'au moins une portion du gaz de synthèse et d'un gaz riche en oxygène (26) dans le haut fourneau,
dans lequel le gaz de haut fourneau est combiné au gaz combustible tout en n'ayant pas été soumis à une décarbonation préliminaire après être sorti du haut fourneau et dans lequel le gaz de haut fourneau est combiné au gaz combustible dans un rapport surstoechiométrique, de sorte que le gaz de synthèse contienne une portion excédentaire du gaz de haut fourneau.

2. Procédé selon la revendication 1, **caractérisé en ce que** le gaz de haut fourneau est combiné au gaz combustible dans un rapport surstoechiométrique avant le processus de reformage.

3. Procédé selon la revendication 1, **caractérisé en ce que** le gaz de haut fourneau est combiné au gaz combustible dans un rapport stoechiométrique avant le processus de reformage, tandis que du gaz de haut fourneau supplémentaire est combiné au gaz de synthèse après le processus de reformage.

4. Procédé selon l'une quelconque des revendications précédentes, **caractérisé en ce que** le gaz riche en oxygène (26) contient au moins 60 %, de préférence au moins 80 %, plus préférablement au moins 90 % de O₂.

5. Procédé selon l'une quelconque des revendications précédentes, **caractérisé en ce que** le gaz riche en oxygène a une température au-dessous de 100 °C.

6. Procédé selon l'une quelconque des revendications, **caractérisé en ce que** le gaz de synthèse est introduit dans le haut fourneau (12) au niveau d'une tuyère et/ou au niveau d'un arbre inférieur ayant une température d'au moins 800 °C, de préférence d'au moins 1 000 °C.

7. Procédé selon l'une quelconque des revendications précédentes, **caractérisé en ce que** le rapport surstoechiométrique est ajusté afin de réguler une température de gaz supérieur du haut fourneau (12).

8. Procédé selon l'une quelconque des revendications précédentes, **caractérisé en ce que** le rapport surstoechiométrique est ajusté afin de réguler une température de flamme du haut fourneau (12).

9. Procédé selon l'une quelconque des revendications précédentes, **caractérisé en ce que**, en plus du gaz de synthèse et du gaz riche en oxygène (26), un combustible auxiliaire (24) est introduit dans le haut fourneau.

10. Procédé selon l'une quelconque des revendications précédentes, **caractérisé en ce qu'**une portion du gaz de haut fourneau est brûlée avec de l'oxygène (64) afin de créer un gaz résiduel (66).

11. Procédé selon l'une quelconque des revendications précédentes, **caractérisé en ce que** le gaz résiduel (66) est condensé et refroidi.

12. Procédé selon l'une quelconque des revendications précédentes, **caractérisé en ce qu'**une portion du gaz de haut fourneau est brûlée dans un dispositif de chauffage (57).

13. Procédé selon l'une quelconque des revendications précédentes, **caractérisé en ce que** le dispositif de chauffage (57) est utilisé pour chauffer le gaz de haut fourneau, le gaz combustible, le mélange de gaz et/ou le gaz de synthèse.

14. Procédé selon l'une quelconque des revendications précédentes, **caractérisé en ce qu'**au moins une portion du gaz résiduel (66) est utilisée pour la capture et le stockage de carbone et/ou la capture et l'utilisation de carbone.

15. Procédé selon l'une quelconque des revendications précédentes, **caractérisé en ce qu'**au moins une portion du gaz résiduel (66) est utilisée pour la production de gaz de synthèse.
